# EUROPEAN PATENT APPLICATION

(11) **EP 4 790 451 A1**
(43) Date of publication of application: **12.08.2026**
(21) Application number: 26152691.7
(22) Date of filing: 19.01.2026
(51) Int. Cl.: G01S 7/481, G01S 7/497, G02B 27/00

(54) **WINDOW CLEANING SYSTEM FOR THE OPTICAL HEAD OF AN OPTICAL AIR-DATA SENSOR**

(30) Priority: 11.02.2025 US 202519050615
(71) Applicant: Honeywell International Inc., Charlotte, NC 28202 (US)
(72) Inventor: DOBBINS, Thomas, Charlotte, 28202 (US); DRASAL, Zbynek, Charlotte, 28202 (US)
(74) Representative: Haseltine Lake Kempner LLP

(57) **Abstract**

A window cleaning system for the optical head of an optical air-data sensor is provided. The window cleaning system includes a cover, an actuator, and a controller. The cover is configured to selectively cover the window of the optical head of the optical air-data sensor. The actuator is configured to move the cover to selectively cover and uncover the window. The controller controls the actuator. The controller is configured to selectively position the cover to cover the window when the window is being cleaned.

## Description

### BACKGROUND

Avionic vehicles, such as fixed-wing aircraft, rotor-craft etc., may use flight control avionics that rely on sensor data. An example of a sensor that provides needed data is a traditional pitot-static system that includes pneumatic sensors. Such data, denoted as air-data, is used by the flight control avionics to evaluate aircraft-to-airstream flight conditions/status that are critical for flight-control and situational awareness. Air-data may include true/computed/indicated airspeed (TAS/CAS/IAS), angle-of-attack/side-slip (AoA/AoS), static/total air temperature (SAT/TAT), pressure altitude (H) and Mach number (M).

The traditional approach of using pitot-probes, however, suffer from characteristic failure modes, which historically has led to several serious flight accidents. Further, the use of pitot probes to gather air-data has limitations. The limitations may arise from a sensitivity to aircraft aerodynamic boundary layer effects, a sensitivity of engine thrust effects as well as a sensitivity to direct sun exposure. These sensitivity limitations may lead to a systematic bias in air-data evaluation that will need to be corrected by calibration. Other limitations of pitot probes used to gather air-data includes a lower accuracy at low-speed that may affect continuity and availability of air-data. Further, ice formation in-flight/on-ground and accidental mechanical on-ground covering of pitot probes may result with a blocking effect of pitot-static sensors leading to a potential risk of in-flight failure.

The limitations of pitot probes may be significantly mitigated by integrating dissimilar technology to determine air-data in an aircraft. One type of dissimilar technology being developed to gather air-data is an optical air-data system. An optical air-data system generally includes a laser to generate light beams that are transmitted through a window of an aircraft into the atmosphere around the aircraft by a transmitter in an optical head. The light beams scatter off particles in the atmosphere. Some of the scattered light beams are received at a receiver in the optical head. A detector in the optical head detects the received light beams. The received light beams are compared to the transmitted light beams in determining air-data that can be used by the aircraft. Any developed optical air-data system needs to be robust and accurate with a stable laser source for the system to become certified for use in an aircraft.

For the reasons stated above and for other reasons stated below which will become apparent to those skilled in the art upon reading and understanding the present specification, there is a need in the art for an window cover cleaning system to an optical head of an optical air-data system.

### SUMMARY

The following summary is made by way of example and not by way of limitation. It is merely provided to aid the reader in understanding some of the aspects of the subject matter described. Embodiments provide an optical head cover system for an optical air-data system.

In one embodiment, a window cover cleaning system to an optical head of an optical air-data system is provided. The window cover cleaning system includes a cover, an actuator, and a controller. The cover is configured to selectively cover a window to the optical head of the optical air-data system. The actuator is configured to move the cover to selectively cover and uncover the window. The controller controls the actuator. The controller is configured to selectively position the cover to cover the window when the window is being cleaned.

In another embodiment, a window cover cleaning system to an optical head of an optical air-data system is provided. The window cover cleaning system includes a cover, an actuator, a controller, at least one fluid nozzle and at least one pneumatic nozzle. The cover is configured to selectively cover a window to the optical head of the optical air-data system. The actuator is configured to move the cover to selectively cover and uncover the window. The controller controls the actuator. The controller is configured to selectively position the cover to cover the window when the window is being cleaned. The at least one fluid nozzle is located between the cover and the window. The at least one fluid nozzle is positioned to direct a flow of cleaning solution on an outside surface of the window when the window is being cleaned. The at least one pneumatic nozzle is located between the cover and the window. The at least one pneumatic nozzle is positioned to direct a flow of air on the outside surface of the window after the flow of the cleaning solution has ended to dry the window.

In yet another embodiment, a method of cleaning a window to an optical head of an optical air-data system of a vehicle is provided. The method includes moving a cover to a closed position that covers the window to the optical head; directing at least one flow of cleaning solution on an outside surface of the window; and directing at least one flow of air on the outside surface of the window after the at least one flow of cleaning solution on the outside surface of the window to complete the cleaning of the window while the cover is in the closed position.

### BRIEF DESCRIPTION OF THE DRAWINGS

The present invention can be more easily understood and further advantages and uses thereof will be more readily apparent, when considered in view of the detailed description and the following figures in which:
Figure 1A is a block diagram of a window cover cleaning system for an optical air-data system with the cover in an open position according to an example aspect of the present invention;
Figure 1B is a block diagram of the window cover cleaning system of Figure 1A with the cover moving into a closed position;
Figure 1C is a block diagram of the window cover cleaning system of Figure 1A with the cover in a closed position;
Figure 2A illustrates a block diagram of a window cover cleaning system for an optical air-data system during the distribution of cleaning solution on an outside surface of the window according to an example aspect of the present invention;
Figure 2B illustrates a block diagram of the window cover cleaning system of Figure 2A during a distribution of a flow of air to dry the outside surface of the window according to an example aspect of the present invention;
Figure 3A illustrates a block diagram of a window cover cleaning system for an optical air-data system during the distribution of cleaning solution on an outside surface of the window according to an example aspect of the present invention;
Figure 3B illustrates a block diagram of the window cover cleaning system of Figure 3A during a distribution of a flow of air to dry the outside surface of the window according to an example aspect of the present invention;
Figure 4 illustrates an event cover operation flow diagram according to an example aspect of the present invention; and
Figure 5 illustrates a window washing operation flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a window cover cleaning system to an optical head of an optical air-data system. In embodiments, a cover selectively covers a window to an optical head of the optical air-data system when the window of the optical head needs to be cleaned due to dirt or other debris collecting on an outside surface of the window to the optical head.

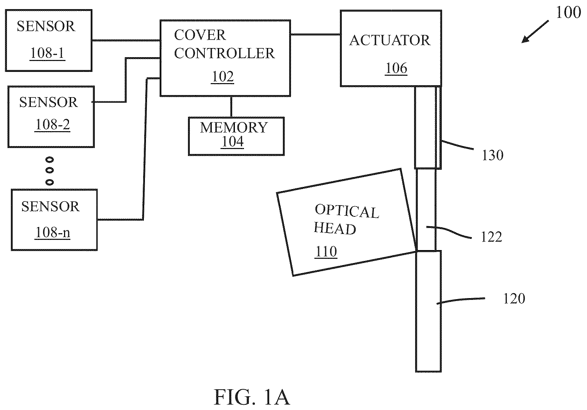

Figure 1A illustrates a block diagram of an optical head cover system for an optical air-data system 100. The optical head cover system for an optical air-data system 100 in this example, includes a controller 102, memory 104, an actuator 106, a cover 130 and a plurality of sensors 108-1, 108-2 through 108-n.

In general, the controller 102 may include any one or more of a processor, microprocessor, a digital signal processor (DSP), an application specific integrated circuit (ASIC), a field program gate array (FPGA), or equivalent discrete or integrated logic circuitry. In some example embodiments, controller 102 may include multiple components, such as any combination of one or more microprocessors, one or more controllers, one or more DSPs, one or more ASICs, one or more FPGAs, as well as other discrete or integrated logic circuitry. The functions attributed to the controller 102 herein may be embodied as software, firmware, hardware or any combination thereof. The controller 102 may be part of a system controller or a component controller. The memory 104 may include computer-readable operating instructions that, when executed by the controller provides functions of the optical head cover system for the optical air-data system 100. Such functions may include the functions of controlling the opening and closing of cover 130 described below. The computer readable instructions may be encoded within memory 104. Memory 104 may be an appropriate non-transitory storage medium or media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The actuator 106 selectively moves the cover 130 to selectively cover the window 122 to the optical head 110. In one example, the actuator 106 is controlled by the controller 102 in this example. The controller 102, based on the operating instructions stored in memory 104 and sensor information from sensors 108-1 through 108-n, directs the actuator 106 to position the cover 130 in a desired location relative to the window 122 to selectively cover or expose the window 122 to the optical head 110.

The plurality of sensors 108-1 through 108-n, which may be generally identified by sensor 108, may include for example, a weight-on-wheel (WOW) sensor, speed sensor, altitude sensor, location sensor, a switch. A sensor 108 senses an aspect associated with a vehicle. A sensor output may provide sensor information on an event the controller 102 is monitoring for in controlling the actuator 106. For example, a WOW may provide an indication, or event, to the controller 102 that an aircraft is on the ground. It may be desired to have the cover 130 cover the window 122 when the aircraft is on the ground to prevent debris from gathering on the window or to protect the window 122 from other factors when the aircraft is on the ground.

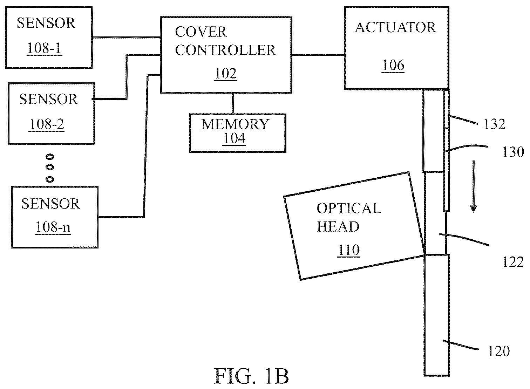

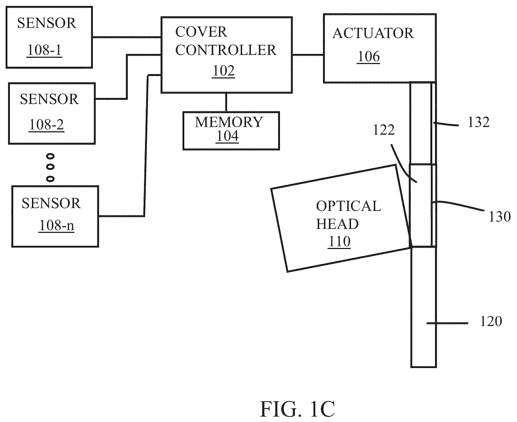

In the example illustrated in Figure 1A, the cover 130 is illustrated as being retained within an outer surface 120 (shell) of an aircraft. In Figure 1A, the cover 130 is positioned away from the window 122 (opened position). Figure 1B illustrates the cover 130 being moved by an actuator member 132 of the actuator 106 to cover the window 122. This may occur in response to an event provided by a sensor 108. Figure 1C illustrates the cover 130 being positioned to cover the window 122 (closed position).

One event that may be used to cover the window 122 with the cover is a cleaning event. Another event that may be used to cover the window is when an aircraft that includes the optical head 110 is on the ground.

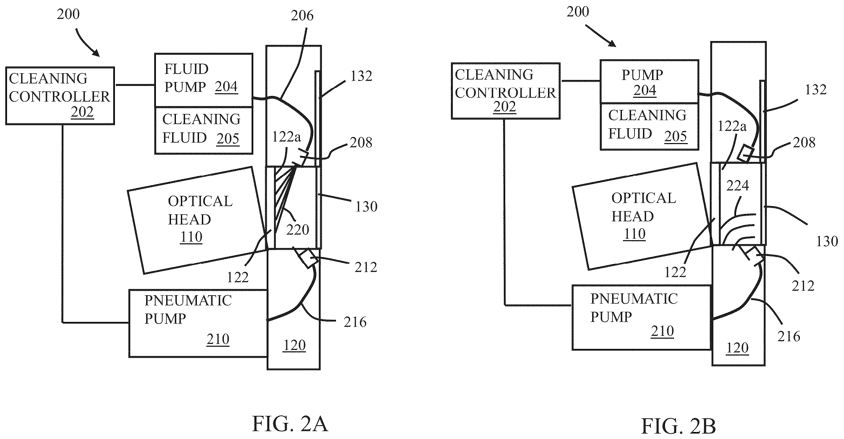

A window cover cleaning system 200 to an optical head of an optical air-data system is illustrated in Figure 2A and Figure 2B. The window cover cleaning system 200 to an optical head of an optical air-data system includes a cleaning controller 202. The cleaning controller 202 in one example, is in communication with the cover controller 102. In one example, the cleaning controller 202 and the cover controller 102 are combined. The cleaning controller 202, in an example, is in communication with the memory 104. Memory 104 may include instructions regarding operation of the cover and cleaning operations that are implemented by the cleaning controller 202.

The window cover cleaning system 200 to an optical head of an optical air-data system includes a fluid pump 204 that is in fluid communication with a fluid reservoir 205 that is designed to hold cleaning solution 220. The fluid pump 204, under control of the cleaning controller 202 pumps the cleaning solution 220 out of the fluid reservoir 205 to at least one fluid nozzle 208 via cleaning solution passage lines 206. Each fluid nozzle 208 is positioned to direct a flow cleaning solution onto the outside surface 122a of window 122 to remove any debris on the surface of window 122 once the cover 130 is positioned to cover the window 122. The window cover cleaning system 200, in an example, includes a pneumatic pump 210. The pneumatic pump 210 is in fluid communication with at least one pneumatic nozzle 212 via at least one pneumatic passage line 216. Each pneumatic nozzle 212 is positioned to direct a flow of air 224 on the surface of the window 122 to dry off the window 122 after the window 122 is cleaned by the cleaning solution. Each fluid nozzle 208 and pneumatic nozzle 212 are positioned between the cover 130 and the outside surface 122a of window 122. Each fluid nozzle 208 and pneumatic nozzle 212 may be positioned in different locations in relation to each other between the cover 130 and the outside surface of window 122. For example, each fluid nozzle 208 may be opposably positioned across from the window 122. In yet another example, a fluid nozzle 208 is positioned near an associated pneumatic nozzle 212. Further in an example, the pneumatic pump 210 may be used to remove air, debris and fluid from around the outside of the window (i.e., is used as a vacuum). Fruther, in an example, a heating system may be used to heat up the air flow used to dry off the outside surface of the window 122.

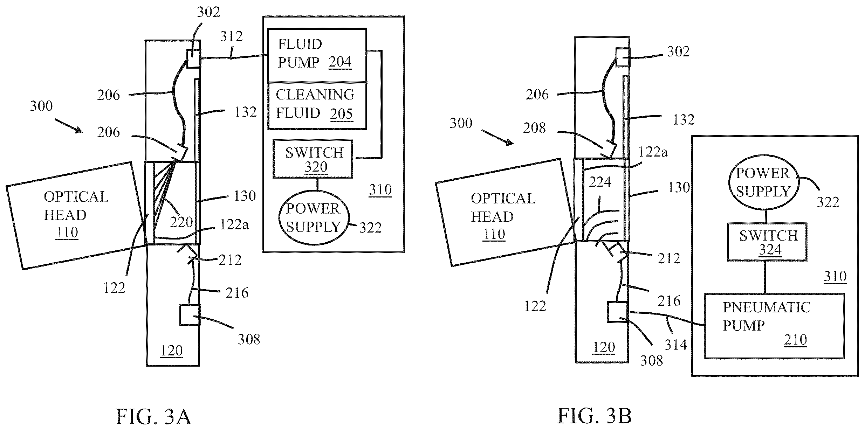

Another example of a window cover cleaning system 300 to an optical head of an optical air-data system is illustrated in Figure 3A and 3B. In this example, an external fluid input port 302 and an external pneumatic input port 308 are used to provide a cleaning solution and an air flow to the window outside surface during cleaning. In this example, the fluid pump 204, reservoir 205, the cleaning solution, and pneumatic pump 210 are located remote from the aircraft in a portable cleaning cart 310. The cleaning cart 310 may be moved to the aircraft during servicing. In this example, a fluid port 302 on the aircraft is selectively coupled to an external fluid passage line 312 that is coupled to the fluid pump 204 in the cleaning cart 310. Further, a pneumatic port 308 on the aircraft is selectively coupled to an external pneumatic passage line 314 that is coupled to the pneumatic pump 204 in the cleaning cart 310.

In Figure 3A, the fluid pump 204 that is coupled to the fluid input port 302, when activated, supplies cleaning solution to the fluid nozzle 208 to spray the cleaning solution on the outside surface 122a of the window 122 to remove dirt and debris from the window 122. In an example, the fluid pump 204 is activated by a switch 320 to selectively provide power from power supply 322 that is externally located from the aircraft. In Figure 3B, the pneumatic pump 210 that is coupled to the pneumatic port 308, when activated, supplies an air flow to the pneumatic nozzle 212 to dry the window 122. In the example of Figure 3B, the pneumatic pump 210 is activated by switch 324 to selectively provide power from power supply 322. Hence, in this example, the fluid pump 204 and the pneumatic pump 210 of the window cover cleaning system 300 are located remote from an aircraft. This also allows for the use of an external power supply 322, external fluid pump 204, and external pneumatic pump 210.

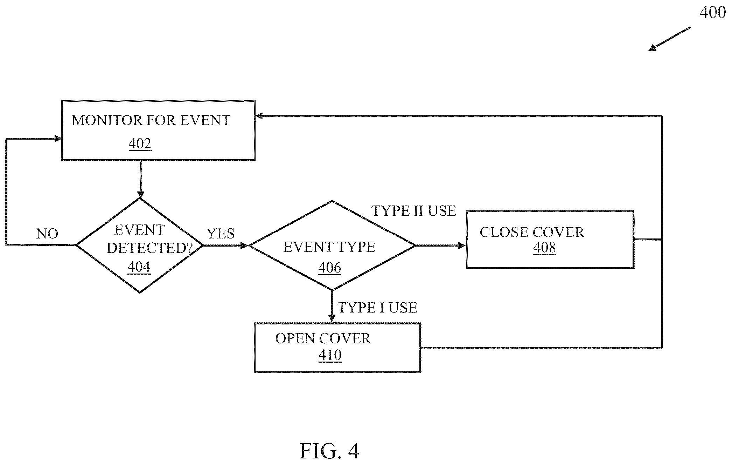

A method of selectively covering the window 122, in an example, is illustrated in an event cover operation flow diagram 400 of Figure 4. The event cover operation flow diagram 400 of Figure 4 is provided as a series of sequential blocks. In one example, controller 102 implementing the operating instructions stored in the memory 104 enables, at least in part, the operations described in the blocks of the event cover operation flow diagram 400 of Figure 4. The sequence of blacks may occur in a different order or even in parallel in other embodiments. Hence, the present invention is not limited to the sequential sequence of blocks set out in Figure 4.

Event cover operation flow diagram 400 of the example of Figure 4 starts at block 402 monitoring for an event. If it is determined an event has not been detected at block 402, the process continues monitoring for an event. If, however, it is determined at block 404 that an event is detected, the event type is then determined at block 406. If it is determined to be a type I event, the cover 130 is moved away from the window 122 (open cover) at block 410. This type of event may be an event that indicates the optical air-data system 100 is about to start operations so the cover 130 needs to be removed from the window 122, the window 122 has been cleaned, or the aircraft that includes the optical head 110 has left the ground. Sensor outputs that may be used to determine a type I event may be provided by, but are not limited to, a WOW sensor, an activation of a switch, a speed sensor, etc.

If it is determined at block 406 the event type is a type II event, the cover 130 is positioned to cover the window 122 (close cover) at block 408. This type of event is an event that indicates the window 122 should be covered. This may occur when an aircraft is on the ground, and when the window needs to be cleaned. Sensor outputs that may be used to determine a type II event include, but are not limited to, a WOW sensor, an activation of a switch, a speed sensor, etc. The process continues at block 402.

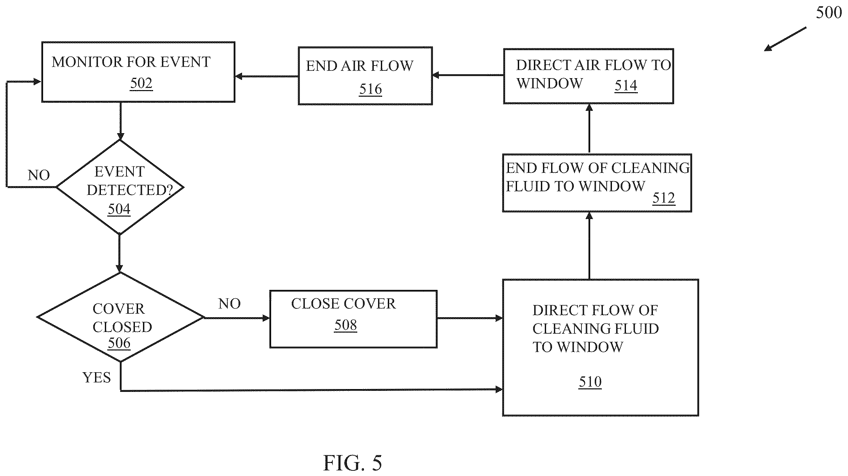

A method of washing the window 122 of a vehicle, in an example, is shown in a window washing operation flow diagram 500 of Figure 5. The window washing operation flow diagram 500 of Figure 5 is provided as a series of sequential blocks. In one example, controller 102 implementing the operating instructions stored in the memory 104 enables, at least in part, the operations described in the blocks of the window washing operation flow diagram 500 of Figure 5. The sequence of blocks may occur in a different order or even in parallel in other embodiments. Hence, the present invention is not limited to the sequential sequence of blocks set out in Figure 5.

The window cleaning operation flow diagram 500 of Figure 5 starts at block 502 monitoring for an event. The event in this example is a clean window event that may be generated by an operator of the vehicle or by a controller, such as cover controller 102 discussed above. In an example, the cleaning of the window 122 may occur on a schedule that is stored in a memory, such as memory 104, may be implemented by controller 102. The schedule may be based on sensed activities of the vehicle. For example, the schedule may set a cleaning of the window to be completed in an aircraft when the aircraft is on the ground, when engines of the aircraft are turned on or off, when the aircraft is being serviced, etc. At block 504 it is determined if a clean window event has been detected. If a clean window event has not been detected at block 504, the process continues monitoring for an event at block 502.

If it is determined at block 504 that a clean window event has been detected, it is then determined at block 506 if the cover 130 to the window 122 is closed (i.e., covering the window 122). If it is determined at block 506 the window is not closed, the window is closed at block 508.

At block 510 a flow of cleaning solution is directed to an outside surface 122a of the window 122 behind the cover 130. The flow of cleaning solution ends at block 512 in this example. A flow of air is then directed to the outside surface 122a of the window 122 behind the cover 130 at block 514 to dry the surface of the window 122. The air flow ends at block 516 and the process continues monitoring for an event at block 502. In one example, at block 516, after the air flow ends, the cover 130 is moved to uncover the window 122 after the cleaning of window 122 to the optical head 110.

### EXAMPLE EMBODIMENTS

Example 1 is a window cover cleaning system to an optical head of an optical air-data system. The window cover cleaning system includes a cover, an actuator, and a controller. The cover is configured to selectively cover a window to the optical head of the optical air-data system. The actuator is configured to move the cover to selectively cover and uncover the window. The controller controls the actuator. The controller is configured to selectively position the cover to cover the window when the window is being cleaned.

Example 2 includes the window cover cleaning system of Example 1, wherein the controller is configured to control the actuator based at least in part on at least one of stored operation instructions in a memory and a detected event.

Example 3 includes the window cover cleaning system of Example 2, wherein the detected event is provided by at least one sensor that is configured to sense an aspect associated with a vehicle that includes the window cover cleaning system.

Example 4 includes the window cover cleaning system of any of the Examples 1-3, wherein the controller is further configured to position the cover to cover the window to the optical head when a vehicle that includes the window cover cleaning system is on a ground.

Example 5 includes the window cover cleaning system of Example 4, wherein the controller determines if the vehicle that includes the optical air-data system is on the ground with one or more sensors.

Example 6 includes the window cover cleaning system of any of the Examples 1-5, further including a memory to store at least operating instructions relating to operation of the cover and the cleaning of the window that are implemented by the controller.

Example 7 includes the window cover cleaning system of any of the Examples 1-6, further including at least one fluid nozzle located between the cover and the window, the at least one fluid nozzle positioned to direct a flow of cleaning solution on an outside surface of the window when the window is being cleaned.

Example 8 includes the window cover cleaning system of Example 7, further including at least one pneumatic nozzle located between the cover and the window. The at least one pneumatic nozzle positioned to direct a flow of air on the outside surface of the window after the flow of the cleaning solution has ended.

Example 9 includes the window cover cleaning system of Example 8, further including a fluid pump and a pneumatic pump. The fluid pump is in fluid communication with the at least one fluid nozzle to supply the cleaning solution to the fluid nozzle. The pneumatic pump is in communication with the at least one pneumatic nozzle to supply the air to the fluid nozzle.

Example 10 includes the window cover cleaning system of Example 9, further including a fluid reservoir to hold the cleaning solution. The fluid pump in fluid communication with the fluid reservoir.

Example 11 includes the window cover cleaning system of Example 10, wherein at least one of the fluid pump, the pneumatic pump and the fluid reservoir is located outside of a vehicle that includes the window cover cleaning system.

Example 12 includes the window cover cleaning system of Example 11, further including at least one of a fluid input port and a pneumatic input port. The fluid input port located on the vehicle to be selectively coupled to the fluid pump via an external fluid passage line. The fluid input port is in communication with the fluid nozzle. The pneumatic input port is located on the vehicle to be selectively coupled to the pneumatic pump via an external pneumatic passage line. The pneumatic input port is in communication with the pneumatic nozzle.

Example 13 includes a window cover cleaning system to an optical head of an optical air-data system. The window cover cleaning system includes a cover, an actuator, a controller, at least one fluid nozzle and at least one pneumatic nozzle. The cover is configured to selectively cover a window to the optical head of the optical air-data system. The actuator is configured to move the cover to selectively cover and uncover the window. The controller controls the actuator. The controller is configured to selectively position the cover to cover the window when the window is being cleaned. The at least one fluid nozzle is located between the cover and the window. The at least one fluid nozzle is positioned to direct a flow of cleaning solution on an outside surface of the window when the window is being cleaned. The at least one pneumatic nozzle is located between the cover and the window. The at least one pneumatic nozzle is positioned to direct a flow of air on the outside surface of the window after the flow of the cleaning solution has ended to dry the window.

Example 14 includes the window cover cleaning system of Example 13, wherein the controller is configured to continue the covering of the window by the cover while the flow of the air on the outside surface of the window is provided by the at least one nozzle.

Example 15 includes the window cover cleaning system of any of the Examples 13-14, further including a fluid pump, pneumatic pump and a fluid reservoir. The fluid pump is in fluid communication with the at least one fluid nozzle to supply the cleaning solution to the fluid nozzle. The pneumatic pump is in communication with the at least one pneumatic nozzle to supply the air to the fluid nozzle. The fluid reservoir is used to hold the cleaning solution. The fluid pump is in fluid communication with the fluid reservoir.

Example 16 includes the window cover cleaning system of Example 15, wherein at least one of the fluid pump, the pneumatic pump and the fluid reservoir is located outside of a vehicle that includes the cover.

Example 17 includes a method of cleaning a window to an optical head of an optical air-data system of a vehicle. The method includes moving a cover to a closed position that covers the window to the optical head; directing at least one flow of cleaning solution on an outside surface of the window; and directing at least one flow of air on the outside surface of the window after the at least one flow of the cleaning solution on the outside surface of the window to complete the cleaning of the window while the cover is in the closed position.

Example 18 includes the method of Example 17, further comprising monitoring for an event that indicates the window to the optical head is to be cleaned; and moving the cover to the closed position that covers the window of the optical head when the event monitored indicates the window to the optical head is to be cleaned.

Example 19 includes the method of any of the Examples 17-18, further including moving the cover to an open position that uncovers the window of the optical head when the cleaning of the window is completed.

Example 20 includes the method of any of the Examples 17-20, further including scheduling the cleaning of the window to the optical head.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A window cover cleaning system (200, 300) to an optical head (110) of an optical air-data system, the window cover cleaning system (200, 300) comprising:
a cover (130) configured to selectively cover a window (122) to the optical head (110) of the optical air-data system;
an actuator (106) configured to move the cover (130) to selectively cover and uncover the window (122); and
a controller (102) to control the actuator (106), the controller (102) configured to selectively position the cover (130) to cover the window (122) when the window (122) is being cleaned.

2. The window cover cleaning system (200, 300) of claim 1, wherein the controller (102) is configured to control the actuator (106) based at least in part on at least one of stored operation instructions in a memory (104) and a detected event.

3. The window cover cleaning system (200, 300) of claim 2, wherein the detected event is provided by at least one sensor (108) that is configured to sense an aspect associated with a vehicle that includes the window cover cleaning system (200, 300).

4. The window cover cleaning system (200, 300) of claim 1, wherein the controller (102) is further configured to position the cover (130) to cover the window (122) to the optical head (110) when a vehicle that includes the window cover cleaning system (200, 300) is on a ground.

5. The window cover cleaning system (200, 300) of claim 4, wherein the controller (102) determines if the vehicle that includes the optical air-data system is on the ground with one or more sensors (108).

6. The window cover cleaning system (200, 300) of claim 1, further comprising:
a memory 104 to store at least operating instructions relating to operation of the cover 130 and the cleaning of the window (122) that are implemented by the controller (102).

7. The window cover cleaning system (200, 300) of claim 1, further comprising:
at least one fluid nozzle 208 located between the cover (130) and the window (122), the at least one fluid nozzle (208) positioned to direct a flow of cleaning solution (220) on an outside surface of the window (122) when the window (122) is being cleaned.

8. The window cover cleaning system of claim 7, further comprising:
at least one pneumatic nozzle (212) located between the cover (130) and the window (122), the at least one pneumatic nozzle (212) positioned to direct a flow of air (224) on the outside surface (122a) of the window (122) after the flow of the cleaning solution has ended.

9. A method of cleaning a window (122) to an optical head (110) of an optical air-data system of a vehicle, the method comprising:
moving a cover (130) to a closed position that covers the window (122) to the optical head (110);
directing at least one flow of cleaning solution (220) on an outside surface (122a) of the window (122); and
directing at least one flow of air (224) on the outside surface (122a) of the window (122) after the at least one flow of the cleaning solution (220) on the outside surface (122a) of the window (22) to complete the cleaning of the window (122) while the cover (130) is in the closed position.

10. The method of claim 9, further comprising:
monitoring for an event that indicates the window (122) to the optical head (110) is to be cleaned; and
moving the cover (130) to the closed position that covers the window (122) of the optical head (110) when the event monitored indicates the window (122) to the optical head is to be cleaned.
